# EUROPEAN PATENT APPLICATION

(11) **EP 1 217 805 A1**
(43) Date of publication of application: **26.06.2002**
(21) Application number: 00128213.6
(22) Date of filing: 22.12.2000
(51) Int. Cl.: H04L 29/12, G06F 17/30

(54) **Method and apparatus for replacing data transmission request expressions**

(71) Applicant: SUN MICROSYSTEMS, INC., Palo Alto, California 94043 (US)
(72) Inventor: Pfohe, Thomas, 22143 Hamburg (DE); Laux, Thorsten O., 20099 Hamburg (DE)
(74) Representative: HOFFMANN - EITLE

(57) **Abstract**

A server (2) for replacing data transmission request expressions in a client/server data processing environment comprises a communication unit (3) for receiving a data transmission request expression (DTRE), for example a short URL, from a client (1) and for transmitting data, for example content data of a web-site, to the client (1), a replacing unit (4) for reading a replacement data transmission request expression (R-DTRE), for example a long URL, from a replacement table unit (5) and for replacing the received data transmission request expression with the read replacement data transmission request expression, and a retrieving unit (6) for retrieving the data, for example content data of a web-site, associated with the replacement data transmission request expression, for example a long URL. Thereby, a client which is not capable of handling long URLs but may only handle short URLs is enabled to access data uniquely identified by a long URL.

## Description

### Field of the invention

The present invention relates to a method and an apparatus for replacing data transmission request expressions in a client/server data processing environment, wherein the apparatus may comprise or may be included in or may be one or more servers.

### Background of the invention

In a client/server data processing environment, a client may send to a server a request for data transmission, said data representing any form of content or information, e.g. the content data of a web-site to be displayed at the client to a user by unit of a browser. When requesting such data from the server, the client has to uniquely identify the requested data by sending to the server a unique data transmission request expression (DTRE), for example a uniform resource locator (URL), allowing the server to access and/or retrieve the required data and transmit it to the client. Uniform resource locators are used in applications in the Internet for accessing data sources forming part of the World Wide Web.

Some clients are only capable of handling and processing a first type of unique expressions, which can be handled and processed by the server as well. A server, however, is usually capable of handling and processing other additional types of unique expressions, which may be considered as a second type of unique expressions.

An example of the above described environment is a client/server environment where a client is capable of handling and processing only a URL of a given length, e.g. 128 characters long, whereas a server may handle and process URLs of any length, e.g. 256, 1024, 2048 or more characters, the length being basically limited only by the way the operations are implemented on the server in software processes or by the physical structure of the server hardware, e.g. random access memory (RAM). The URLs having a maximum length of N characters (for example: N =128) may be considered as short URLs and the URLs having a practically unlimited length may be considered as long URLs.

In the environment described above it would be preferable to allow the client to use URLs which it is capable of handling and processing, for example URLs having a maximum length of 128 characters (short URLs), but still allow the client to request transmission of any data, for example content data of a web-site, which may be stored in such a manner that it should be accessed using a URL of a kind the client is not capable of handling and processing, for example URLs having a length of more than 128 characters (long URLs). Then, the client would not be limited to those data, for example content data of web-sites, which are organized and stored using URLs of the client type, for example having a maximum length of 128 characters (short URLs). The aim is to allow access to any data using any kind of URLs, including those URLs which the client as such is not capable of handling and processing. The access should be limited only by the server for storing and retrieving data at the server side. The short URLs represent data transmission request expressions of a first type and the long URLs represent data transmission request expressions of a second type.

### Summary of the Invention

It is therefore desirable to provide a method and apparatus for replacing data transmission request expressions, in a client/server data processing environment.

According to an embodiment, a method for replacing data transmission request expressions at a server in a client/server data processing environment comprises the operation of receiving a data transmission request expression (DTRE) transmitted from a client, said DTRE being associated with data, for example content data of a web-site, the operation of reading a replacement data transmission request expression (R-DTRE) from a data transmission request expression replacement table, the operation of retrieving data, for example content data of a web-site, associated with the R-DTRE, and the operation of transmitting the data, for example content data of a web-site, to the client.

In the above embodiment, the client may request data transmission by transmitting a DTRE of a kind which the client is capable of processing and handling. At the server the DTRE transmitted from the client is replaced and the R-DTRE is used for retrieving the data to be transmitted to the client. As an example, the DTRE may be a uniform resource locater (URL) of a short type, e.g. having a maximum length of 128 characters which the client may be capable of handling and processing. When received at the server and before data are retrieved, the short URL is replaced with a uniform resource locator (URL) of a long type, e.g. allowing a length of more than 128 characters and the long URL is used to retrieve data which are associated with the long URL. Thus, even a client which is not capable of handling long URLs may request transmission of data associated with long URLs as the short URLs transmitted from the client are replaced with long URLs at the server for the data retrieving operation. Client capable of handling and processing long URLs may directly communicate with the server and use long URLs to request the transmission of data. At the server, it is not necessary to consider the limited capability of clients regarding the handling an processing of URLs. Thus, data may be stored at the server using any type of URL as with respect to clients requiring URLs of a certain type a replacement will be performed according to the invention.

The above method may comprise further the operation of determining whether the retrieved data contain a data transmission request expression and if the retrieved data contains a data transmission request expression, the operation of reading a replacement data transmission request expression from a data transmission request expression replacement table, and the operation of replacing the data transmission request expression in the retrieved data with the replacement data transmission request expression. Thus, also in the data transmitted to the client any DTRE which the client is not capable of handling and processing will be replaced.

The above methods may comprise further the operation of determining whether the retrieved data contain a data transmission request expression, and if the retrieved data contains a data transmission request expression, the operation of determining whether the data transmission request expression should be replaced with respect to the client to which the data is to be transmitted and if the data transmission request expression should be replaced, the operation of reading a replacement data transmission request expression from a data transmission request expression replacement table, and the operation of replacing the data transmission request expression in the retrieved data with the replacement data transmission request expression. Therefore, a DTRE in the data to be transmitted to the client is only replaced if the DTRE contained in said data is not such that the DTRE can be handled and processed by the client.

The above methods may be implemented such that the operation of reading of a replacement data transmission request expression comprises the operation of computing a hash function on the basis of then data transmission request expression and the operation of using the computed hash value in the operation of reading the replacement data transmission request expression from data transmission request expression replacement table. Hash functions and hash tables, i.e. tables allowing access on the basis of hash values, are especially suitable in a client/server data processing environment requiring high performance data processing operations. Hash functions and hash tables may, however, also be used in other client/server data processing environments.

The above methods may be implemented such that the operation of reading of a replacement data transmission request expression comprises the operation of determining whether a replacement data transmission request expression exists in the data transmission request expression replacement table for replacing a received data transmission request expression and, if no replacement data transmission request expression exists in data transmission request expression replacement table for the received data transmission request expression, the operation of generating a replacement data transmission request expression and the operation of storing the generated replacement data transmission request expression in association with the data transmission request expression for which the generated replacement data transmission request expression is a replacement, and the operation of reading the replacement data transmission request expression associated with the received data transmission request expression. Thus, if no replacement DTRE exists it will be generated and stored for subsequent use.

According to another embodiment of the invention, a method for replacing data transmission request expressions at a server in a client/server data processing environment may comprise the operation of retrieving data for transmission to a client, said data comprising a data transmission request expression associated with data; the operation of reading a replacement data transmission request expression in a data transmission request expression replacement table; the operation of replacing the data transmission request expression in said retrieved data; and the operation of transmitting said data to said client. This method is especially suitable in an environment in which the DTRE received from the client does not require a replacement.

The above method may be implemented such that the operation of reading of a replacement data transmission request expression comprises the operation of computing a hash function on the basis of the data transmission request expression and the operation of using the computed hash value in the operation of reading the replacement data transmission request expression from data transmission request expression replacement table. The advantages of hash functions and hash tables as described above are applicable here also.

The above methods may further be implemented such that the operation of reading of a replacement data transmission request expression comprises the operation of determining whether a replacement data transmission request expression exists in the data transmission request expression replacement table for replacing a retrieved data transmission request expression and, if no replacement data transmission request expression exists in data transmission request expression replacement table for the retrieved data transmission request expression, the operation of generating a replacement data transmission request expression and the operation of storing the generated replacement data transmission request expression in association with the retrieved data transmission request expression for which the generated replacement data transmission request expression is a replacement, and the operation of reading the replacement data transmission request expression associated with the retrieved data transmission request expression.

In all of the embodiments described above a data transmission request expression may comprise or may be included in or may be a first uniform resource locator (URL) having a first length and a replacement data transmission request expression may comprise or may be included in or may be a uniform resource locator having a second length. If the first uniform resource locator is received from the client, the first length is equal or less than 128 characters and the second length is equal or more than 128 characters. If the second uniform resource locator is to be transmitted to the client, the second length is equal or less than 128 characters and the first length is equal or more than 128 characters. The replacing of URLs is an especially advantageous application of the methods described above. However, the methods according to the invention are not limited thereto.

According to another embodiment of the invention, a server for replacing data transmission request expressions in a client/server data processing environment may comprise communication unit for receiving a data transmission request expression (DTRE) from a client and for transmitting data, for example content data of a web-site, to the client, replacing unit for reading a replacement data transmission request expression (R-DTRE) from a replacement table unit and for replacing the received data transmission request expression with the read replacement data transmission request expression, and retrieving unit for retrieving the data, for example content data of a web-site, associated with the replacement data transmission request expression.

In the above server, the communication unit, the replacing unit and the retrieving unit may exchange with each other data being or including a data transmission request expression.

The above server may comprise storage unit for storing data to be retrieved by the retrieving unit. This is in accordance with a typical server situation in which the server is implemented such that it has direct access to a storage unit that is provided as an internal device of the server . However, the storage unit may also be provided external to the server or even at another server.

In the servers above, the replacement table unit may be provided in a memory unit of the server, for example random access memory of the server, or may form part of the storage unit. The first alternative is usually advantageous with respect to processing speed and therefore the overall performance as access to memory unit is typically fast, whereas the second alternative is usually advantageous regarding the storage capacity as storage unit like hard disk drives or hard disk drive arrays provide large capacity.

The above servers may be implemented such that the retrieving unit communicate with another server for retrieving data. Thereby, the storage capacity of another server or servers may be included in the client/server data processing environment of the invention.

In the servers above, the replacement table unit may comprises a first replacement table unit and a second replacement table unit. This implementation is especially useful when hash table as described above are implemented as each replacement table may hold the entries of a single hash table allowing access on the basis of a hash value computed on the basis of a DTRE received either from the client or the retrieving unit.

In the servers above, first replacing unit for replacing data transmission request expressions received from the communications unit and second replacing unit for replacing data transmission request expressions received from the retrieving unit may be provided. This structure allows separate code sections to be implemented allowing code optimisation.

### Brief description of the drawings

- Fig. 1: shows a block diagram illustrating a client/server data processing environment including a server according to an embodiment of the invention;
- Fig. 2: shows a diagram illustrating operations executed in accordance with a method which is an embodiment of the invention;
- Fig. 3: shows a diagram illustrating operations executed in accordance with a method which is a further embodiment of the invention, when taken in conjunction with the operations illustrated in Fig. 2;
- Fig. 4: shows a diagram illustrating operations executed in accordance with a method which is a further embodiment of the invention, when taken in conjunction with the operations illustrated in Fig. 2;
- Fig. 5: shows a diagram illustrating operations executed in accordance with a method which is a further embodiment of the invention, when taken in conjunction with the operations illustrated in Fig. 2 to 4;
- Fig. 6: shows a diagram illustrating operations executed in accordance with a method which is a further embodiment of the invention, when taken in conjunction with the operations illustrated in Fig. 2 to 4;
- Fig. 7: shows a block diagram illustrating a client/server data processing environment including a server which is a further embodiment of the invention;
- Fig. 8: shows a block diagram illustrating a client/server data processing environment including a server which is a further embodiment of the invention;
- Fig. 9: shows a block diagram illustrating a client/server data processing environment including a server which is a further embodiment of the invention; and
- Fig. 10: shows a block diagram illustrating a client/server data processing environment including a server which is a further embodiment of the invention.

### Detailed description of the preferred embodiments

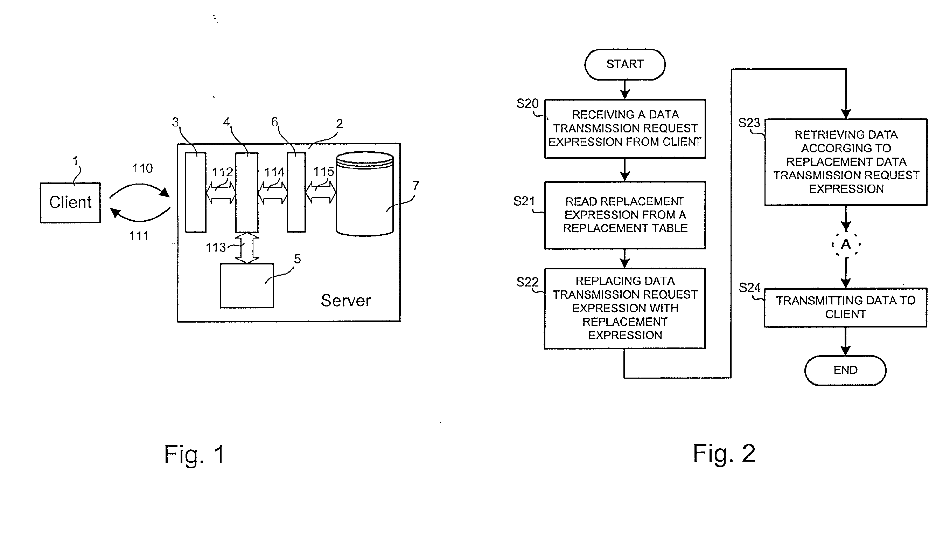

In the following an embodiment of the invention will be described with respect to Fig. 1 which shows a block diagram illustrating a client/server data processing environment in which the method and apparatus according to the present invention may be implemented.

Fig. 1 shows a client 1 communicating with a server 2 as indicated by arrows 110 and 111. The server 2 is shown to include a communication unit 3 for allowing the server 2 to communicate with the client 1, for example, for receiving and transmitting data. The client 1 may transmit to the server 2 an expression requesting the transmission of data, for example content data of a web-site, as specifically illustrated by arrow 110, and the server 2 may transmit the requested data, for example content data of a web-site, to the client 1, as illustrated by arrow 111.

Fig. 1 further shows the server 2 to include a replacing unit 4. The communication unit 3 exchanges data with the replacing unit 4, as illustrated by arrow 112, allowing the replacing unit 4 to replace data transmission request expressions which may be included in the data transmitted from the communication unit 3 to the replacing unit 4. When receiving a data transmission request expression, the replacing unit 4 accesses a replacement table unit 5, as indicated by arrow 113, to look up in the replacement table unit 5 an entry that corresponds to the data transmission request expression received from the communication unit 3. If an entry exists in the replacement table unit 5, the replacing unit 4 reads from the replacement table unit 5 the replacement expression which corresponds to the data transmission request expression received from the communication unit 3. The replacing unit 4 replaces the data transmission request expression contained in the data received from the communication unit 3 with the replacement expression read from the replacement table unit 5. The entries of the replacement table unit 5 are valid data transmission request expressions uniquely identifying data stored in data storage unit 7 or at some other location, for example another server.

The replacement table unit 5 of the embodiment of Fig. 1 is provided in a memory unit of server 2, for example random access memory (RAM), indicated with reference number 5 in Fig. 1 as well.

Fig. 1 also shows the server 2 to include retrieving unit 6. The replacing unit 4 forwards the data received from the communication unit 3, however, now containing the replacement data transmission request expression as read from the replacement table unit 5, to the retrieving unit 6 as indicated by arrow 114.

Whenever the retrieving unit 6 receives a replacement data transmission request expression, the retrieving unit 6 accesses the data storage unit 7 to retrieve (read) data stored in the data storage unit 7. Thereafter, the retrieving unit 6 communicates the retrieved data to the replacing unit 4 for subsequent forwarding to the communication unit 3 and transmission to the client 1. Alternatively, the retrieving unit 6 may communicate the retrieved data directly to the communication unit 3 for transmission to the client 1.

If the content data as retrieved from the storage unit 7 contain data transmission request expressions, the replacing unit 4 may access the replacement table unit 5, as indicated by arrow 113, to look up in the replacement table unit 5 whether a replacement expression exists for the data transmission request expression included in the content data received from the retrieving unit 6, as indicated by arrow 114. If a replacement expression exists in the replacement table unit 5, the replacing unit 4 reads the replacement expression from the replacement table unit 5 and replaces in the data received from the retrieving unit 6 the data transmission request expression with the replacement expression. Thereafter, the replacing unit 4 communicates the data, now containing the replacement data transmission request expression, to the communication unit 3, as indicated by arrow 112. The communication unit 3 transmits the requested content data, however, now containing one or more replacement data transmission request expressions, to the client 1, as indicated by arrow 111.

Alternatively, the replacing unit 4 may analyse the data transmission request expressions in the content data received from the retrieving unit 6 in order to decide whether a replacement expression should be read from the replacement table unit 5. If the data transmission request expression in the data received from the retrieving unit 6 are such that the client 1 is capable of handling and processing the data transmission request expression, the replacing unit 4 may omit the replacing of the data transmission request expression and may forward the content data unaltered.

Further, if the replacing unit 4 identifies the data transmission request expression received in the content data from the retrieving unit 6 to be such that the client 1 is not capable of handling and processing it and if no replacement expression exists in the replacement table unit 5, the replacing unit 4 may generate a replacement data transmission request expression which can be handled and processed by client 1 and may store the replacement data transmission request expression in the replacement table unit 5 together with information that allows to subsequently identify the newly generated replacement data transmission request expression to correspond to the data transmission request expression received in the content data from the retrieving unit 6. Thus, if client 1 returns a data transmission request expression received from server 2, which expression has been replaced by the replacing unit 4 after having generated a new replacement expression and after having stored it in the replacement table unit 5, the replacing unit 4 may look up the corresponding data transmission request expression, which has previously been received in content data from retrieving unit 6, and may transmit it to the retrieving unit 6.

In the following, the elements of the client/server data processing environment as discussed above for describing an embodiment of the present invention will be described in further detail.

The server 2 may be a data processing device having large capacity for serving a large number of clients communicating with the server.

The server 2 includes replacing unit 4 which may comprise or may be included in or may be constituted by one or more code sections containing instructions for performing replacing operations with respect to data transmission request expressions received from a client, either separately or included in other data. However, it is also possible that the replacing unit may comprise or may be included in or may be constituted by a data processing device, which may also be a server, communicating with server 2 shown in Fig. 1 to receive a data transmission request expression from server 2 and to return to server 2 a replacement data transmission request expression.

The replacing operation may comprise the comparing of data transmission request expressions stored in the replacement table unit 5 and, after having identified the data transmission request expression in the replacement table unit 5, the reading of the corresponding replacement data transmission request expression from the replacement table unit 5. Alternatively, the replacing operation may comprise the computing of a key value on the basis of the data transmission request expression and to access the replacement table unit 5 using the key value for reading the corresponding replacement data transmission request expression from the replacement table unit 5. Preferred functions for computing the key value may be hash functions as for example described in Donald E. Knuth, "The Art of Computer Programming", Vol. 3/"Sorting and Searching", pages 506-649 (Addison Wesley Publishing Company, 1973), incorporated here by reference.

The server 2 includes retrieving unit 6 which may comprise or may be included in or may be constituted by one or more code sections including instructions for performing retrieving operations with respect to data transmission request expressions related to data stored in the storage unit 7. However, it is also possible that the retrieving unit 6 may comprise or may be included in or may be constituted by a data processing device, which may also be a server, communicating with the server 2 shown in Fig. 1 to receive a data transmission request expression for retrieving the corresponding content data from data storage unit 7 and for transmitting the retrieved content data.

The server 2 includes replacement table unit 5 which may comprise or may be included in or may be constituted by a memory unit, for example a random access memory (RAM), of server 2 or any other form of data storage unit which may be accessed by the replacing unit 4.

The server 2 includes data storage unit 7 which may comprise or may be included in or may be constituted by random access memory (RAM), a hard disc drive, a drive array or any other form of a data storage device which can be accessed by the data retrieving unit 6. In Fig. 1 the server 2 is shown to include the data storage unit 7, however, the data storage unit 7 may be provided also external to the server 2.

It is noted that a computer readable medium may be provided having a program recorded thereon, where the program is to make a computer or system of data processing devices execute instructions of the described embodiments of the invention, particularly of the communication unit, the replacing unit, the retrieving unit and the replacement table unit of the server. A computer readable medium can be a magnetic or optical or other tangible medium on which a program is recorded, but can also be a signal, e.g. analogue or digital, electromagnetic or optical, in which the program is embodied for transmission.

Further, a computer program product may be provided comprising the computer readable medium.

In the following, a further embodiment of the invention will be described with respect to Fig. 2. Fig. 2 shows a flow diagram of operations executed in accordance with a method of replacing data transmission request expressions.

The operations illustrated in Fig. 2 may for example be executed using the server of the embodiment described with respect to Fig. 1, however, the embodiment of Fig. 2 is not limited thereto.

As outlined before with respect to the embodiment of Fig. 1, the method of the embodiment of Fig. 2 also allows a client which is capable of handling data transmission request expressions of a first type, to request from a server the transmission of data, for example content data of a web-site, said data being identified by a data transmission request expression of a second type.

In an operation S20 data are received at a server 2 from a client 1, said data being or including a data transmission request expression (DTRE). The DTRE identifies uniquely some data or data block, for example content data of a web-site, to be transmitted to the client 1 upon the request for data transmission expressed via the DTRE.

In an operation 21 a replacement expression is read from a replacement table. This operation may be performed by server 2 using replacing unit 4 which access replacement table unit 5.

In an operation S22 the DTRE received from client 1 is replaced with the replacement data transmission request expression (R-DTRE) read from the replacement table. With respect to the embodiment of the invention discussed above with reference to Fig. 1, the operation of replacing the DTRE with the R-DTRE may be performed by the replacing unit 5 of server 2.

In an operation S23 data, for example content data of a web-site, are retrieved on the basis of the R-DTRE. Again with reference to Fig. 1, this operation may be performed by the retrieving unit 6 of the server 2.

In an operation S24 the retrieved data are transmitted to the client 1. This operation may be performed employing the communication unit 3 of server 1, as shown in Fig. 1.

It should be noted that in Fig. 2 a reference point A is shown which does not represent any operation or operation of the method illustrated in the diagram of Fig. 2 but will be used in the description of further embodiments of the invention below.

If the operations S20 to S24 of the above described method are performed, a server may transmit to a client any data, for example content data of a web-site, regardless of whether the client is capable of handling and processing a DTRE of a first type only. According to the above described method which is an embodiment of the invention, the DTRE transmitted from the client to the server is replaced with a R-DTRE which is thereafter used to retrieve data for transmission to the client.

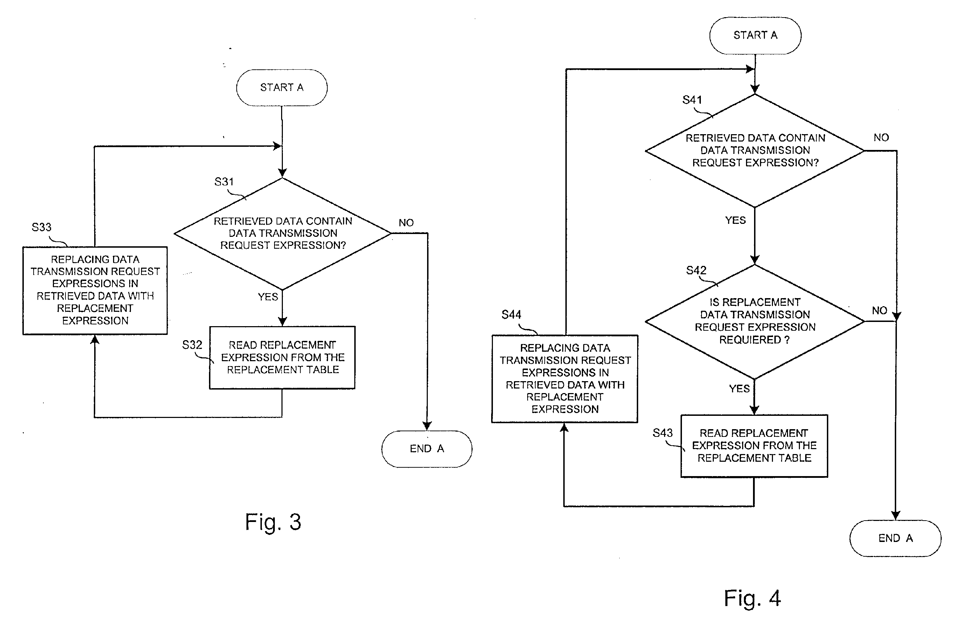

In another preferred embodiment of the invention a method may comprise the following operations which are to be inserted at reference point A in the method described with reference to the diagram of Fig. 2. Thus, operations S20 to S23 and operation S24 should be understood to form part of the method described with reference to Fig. 3. A repeated description of these operations will be omitted in the following to avoid redundancy.

In an operation S31 it is decided whether the retrieved data, for example the content data of a web-site, contain a DTRE.

This operation may be performed by the replacing unit 4 of server 2 of the embodiment described with respect to Fig. 1. In case that the decision of operation S31 is "NO", i.e. that the retrieved data do not contain any data transmission request expression, the sequence of operations of Fig. 3 ends and the method is continued according to Fig. 2. In case the decision of operation S31 is "YES", i.e. the retrieved data contain a DTRE, a R-DTRE is read, of operation S32, from a replacement table. This operation may be performed by the replacing unit 4 of server 2 of the embodiment described with respect to Fig. 1.

In an operation S33, the DTRE in the retrieved data is replaced with the R-DTRE read from the replacement table. This operation may also be performed in the replacing unit 4 of the server 2 of the embodiment of the invention shown in Fig. 1.

In another preferred embodiment of the invention a method may comprise the following operations which are to be inserted at reference point A in the method described with reference to the flow diagram of Fig. 2. Thus, operations S20 to S23 and operation S24 have to be understood to form part of the method described with reference to Fig. 4. A repeated description of these operations will be omitted in the following to avoid redundancy.

In an operation S41 it is decided whether the retrieved data, for example the content data of a web-site, contain a DTRE. This operation may be performed by the replacing unit 4 of server 2 of the embodiment described with respect to Fig. 1. In case that the decision in operation S41 is "NO", i.e. that the retrieved data do not contain any data transmission request expression, the sequence of operations of Fig. 4 ends and the method is continued according to Fig. 2. In case the decision in operation S41 is "YES", i.e. the retrieved data contain a DTRE, the method according to this embodiment continues.

In an operation S42 it is decided whether the DTRE contained in the retrieved data needs to be replaced in order for the client to be capable of handling and processing the DTRE. This operation may be performed by the replacing unit 4 of server 2 of the embodiment described with respect to Fig. 1. In case the decision in operation S42 is "NO", i.e. it is not necessary to replace the DTRE as it can be handled and processed by the client, the sequence of operations in Fig. 4 ends and the method is continued according to Fig. 2. In case the decision in operation S42 is "YES", i.e. the DTRE contained in the retrieved data needs to be replaced, a R-DTRE is read, in an operation 543, from a replacement table. This operation may be performed by the replacing unit 4 and the replacement table unit 5 of server 2 of the embodiment described with respect to Fig. 1.

In an operation S44, the DTRE in the retrieved data is replaced with the R-DTRE read from the replacement table. This operation may be performed by the replacing unit 4 and the replacement table unit 5 of server 2 of the embodiment described with respect to Fig. 1.

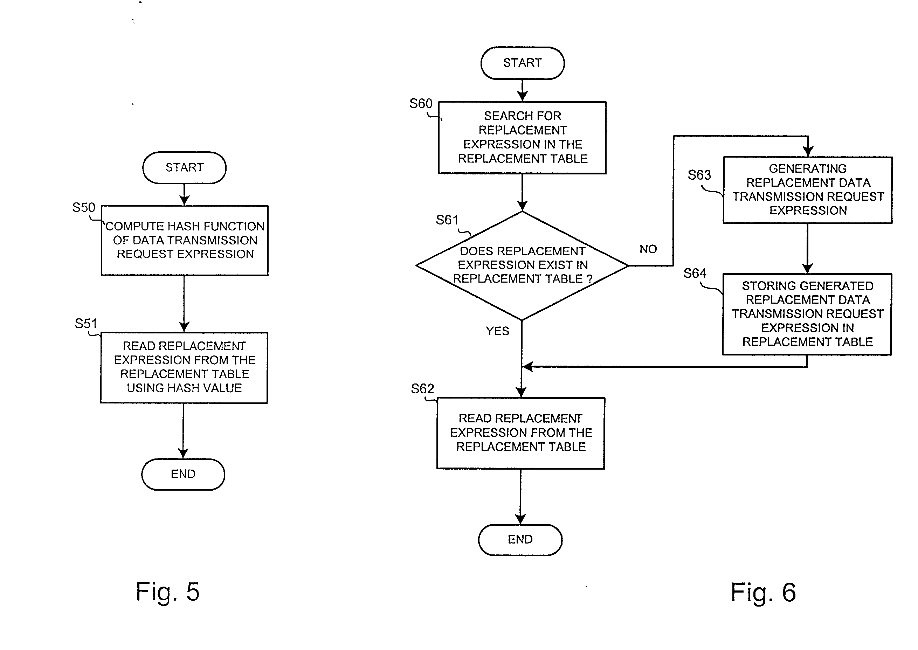

In the methods of the preferred embodiments of the invention discussed with reference to Figs. 2 to 4 a replacement expression R-DTRE is read from a replacement table in operations S21, S32 and S43. According to another embodiment of the invention these operations may be substituted with the operations shown in Fig. 5.

In an operation S50 a hash function is used to compute a hash value on the basis of the data transmission request expression received from the client. In an operation S51 the hash value is used to read a replacement expression from the replacement table. These operations may be performed by the replacing unit 4 and the replacement table unit 5 of server 2 of the embodiment described with respect to Fig. 1.

Using a hash function and a hash table to store and access replacement expressions allows a fast replacement operation. The principles of hash functions and hash tables are known from Donald E. Knuth, "The Art of Computer Programming", Vol. 3/"Sorting and Searching", pages 506-649 (Addison Wesley Publishing Company, 1973), incorporated here by reference.

In the methods of the preferred embodiments of the invention discussed with reference to Figs. 2 to 5 the replacement expression R-DTRE is read from a replacement table in operations S21, S32, S43 and S51. According to another embodiment of the invention these operations may be substituted with the operations shown in Fig. 6.

In an operation S60, a search is performed for a R-DTRE in the replacement table. In an operation S61 it is decided whether a R-DTRE exists in the replacement table. Both operations may be performed by the replacing unit 4 of server 2 of the embodiment described with respect to Fig. 1. In case the decision of operation S61 is "YES", i.e. a R-DTRE exists in the replacement table, the R-DTRE is read, in an operation S62, from the replacement table and the sequence of operations of Fig. 6 ends. In case the decision of operation S61 is "NO", i.e. a R-DTRE does not exist in the replacement table, a R-DTRE is generated in an operation S63. In an operation S64, the R-DTRE is stored in the replacement table, so that the R-DTRE can be read from the replacement table in operation S62. These operations may be performed by the replacing unit 4 and the replacement table unit 5 of server 2 of the embodiment described with respect to Fig. 1.

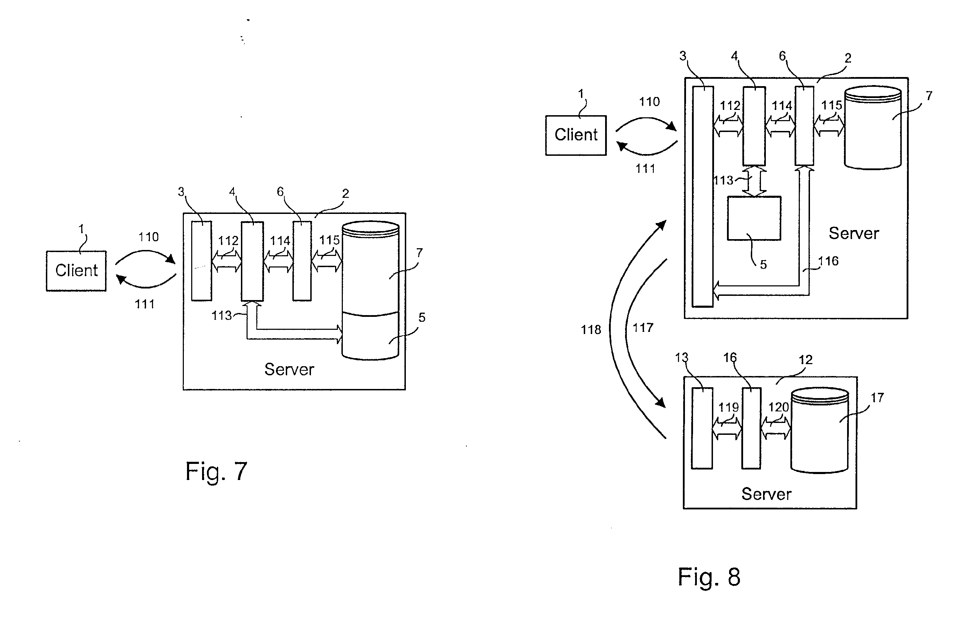

In the following a further preferred embodiment of the invention will be described with respect to Fig. 7 which shows a block diagram illustrating a client/server data processing environment in which the method and server according to the present invention may be implemented.

In the following description of the preferred embodiment of the invention shown in Fig. 7 only those aspects will be described in which this preferred embodiment differs from the preferred embodiment of the invention shown in Fig. 1. As far as common or similar aspects of both embodiments of Figs. 1 and 7 are concerned, reference is made to the respective description of the preferred embodiment shown in Fig. 1.

Fig. 7 shows the replacing unit 4 of server 2 to communicate with the storage unit 7, as indicated by arrow 113, in order to access the replacement table unit 5 which forms part of the storage unit 7 of server 2. Therefore, when receiving a data transmission request expression, the replacing unit 4 accesses the storage unit 7, or more specifically the replacement table unit 5 implemented in the storage unit 7, as indicated by arrow 113, to look up and read in the replacement table unit 5 an entry that corresponds to the data transmission request expression (DTRE) received from the communication unit 3. The implementation of the replacement table unit 5 in the storage unit 7 may be achieved by a data file stored in the storage unit 7. The information stored in this data file may be accessed by the replacing unit 4 in order to read replacement data transmission request expressions (R-DTRE).

The replacing unit 4 of the preferred embodiment of the invention shown in Fig. 7 may comprise or may be included in or may be constituted by one or more code sections containing instructions for performing replacing operations with respect to data transmission request expressions received from the client, either separately or included in other data. However, it is also possible that the replacing unit 4 may comprise or may be included in or may be constituted by a data processing device, which may also be a server, communicating with the storage unit 7 which may either be internal or external to server 2.

In the following, a further preferred embodiment of the invention will be described with respect to Fig. 8 which shows a client/server data processing environment in which the method and server according to the present invention may be implemented.

In the following description of the preferred embodiment of the invention shown in Fig. 8 only those aspects will be described in which this preferred embodiment differs from the preferred embodiment of the invention shown in Fig. 1. As far as common or similar aspects of both preferred embodiments of Figs. 1 and 8 are concerned, reference is made to the respective description of the preferred embodiment shown in Fig. 1.

The preferred embodiment of the invention shown in Fig. 8 differs from the preferred embodiment shown in Fig. 1 in that the retrieving unit 6 may also retrieve data, for example content data of a web-site, which are stored on storage unit 17 of another server 12. The retrieving unit 6 of server 2 may for this purpose communicate with the communication unit 3 of server 2, as indicated by arrow 116. Whenever the retrieving unit 6 receives a replacement data transmission request expression (R-DTRE) from the replacing unit 4, as indicated by arrow 114, the retrieving unit 6 accesses either the data storage unit 7 to retrieve (read) content data stored in the storage unit 7 or transmits the replacement data transmission request expression via the communication unit 3 of server 2 to server 12, as indicated by arrow 117. Server 12 includes a communication unit 13 to receive the replacement data transmission request expression transmitted from the server 2 as indicated by arrow 117. The communication unit 13 of server 12 communicates with a retrieving unit 16 of server 12 as indicated by arrow 119.

Whenever the retrieving unit 16 of server 12 receives a replacement data transmission request expression, the retrieving unit 16 accesses the data storage unit 17 of server 12 to retrieve (read) data, for example content data of a web-site, stored in the storage unit 17. Thereafter, the retrieving unit 16 communicates the retrieved content data to the communication unit 13 of server 12 for subsequent transmission to server 2 as indicated by arrow 118. Whenever data are transmitted from server 12 to server 2 as indicated by arrow 118 the communication unit 3 of server 2 receives the transmitted data and forwards the data to the retrieving unit 6 of server 2 as indicated by arrow 116. Thereafter, the retrieving unit 6 of server 2 communicates the retrieved data to the replacing unit 4 for subsequent forwarding to the communication unit 3 and transmission to the client 1. Alternatively, the retrieving unit 6 of server 2 may communicate the retrieved data directly to the communication unit 3 for transmission to the client 1.

As is apparent from a comparison of Figs. 7 and 8 server 2 of the embodiment described with respect to Fig. 8 may comprise a replacement table unit 5 which forms part of the storage unit 7, as shown in Fig. 7. Accordingly, the replacement unit 4 of server 2 shown in Fig. 8 would communicate with the replacement table unit 5 forming part of storage unit 7 as shown in Fig. 8, indicated by arrow 113.

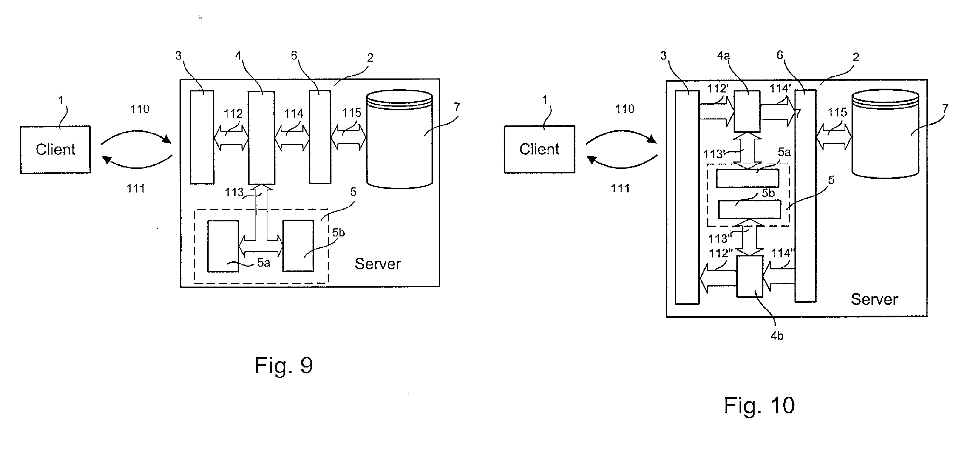

In the following, a further preferred embodiment of the invention will be described with respect to Fig. 9 which shows a client/server data processing environment in which the method and server according to the present invention may be implemented.

In the following description of the preferred embodiment of the invention shown in Fig. 9 only those aspects will be described in which this preferred embodiment differs from the preferred embodiment of the invention shown in Fig. 1. As far as common or similar aspects of both embodiments of Fig. 1 and 9 are concerned, reference is made to the respective description of the preferred embodiment shown in Fig. 1.

Fig. 9 shows the replacing unit 4 of server 2 to communicate with a replacement table unit 5 which comprises a first replacement table unit 5a and a second replacement table unit 5b. When receiving a data transmission request expression from the client 1, the replacing unit 4 accesses the first replacement table unit 5a to look up and read in the first replacement table unit 5a an entry which corresponds to the data transmission request expression received from the client 1 via the communication unit 3. When receiving a data transmission request expression from the retrieving unit 6, the replacing unit 4 accesses the second replacement table unit 5b to look up and read in the second replacement table unit 5b an entry that corresponds to the data transmission request expression received from the retrieving unit 6. In the embodiment shown in Fig. 9, since two separate replacement table unit 5a and 5b are provided for the replacing unit 4 to look up and read an entry that corresponds to the data transmission request expression received from either the client 1 or the receiving unit 6, the replacement table unit 5a and 5b may be optimised for the operation of looking up and reading the respective replacement data transmission request expression.

For example, the first and the second replacement table unit 5a and 5b may comprise a hash table allowing access to the entries on the basis of a hash function which is computed for the data transmission request expression received either from the client 1 or the retrieving unit 6. The principles of hash functions and hash tables are described for example in Donald E. Knuth, "The Art of Computer Programming", Vol. 3/"Sorting and Searching", pages 506-549 (Addison-Wesley Publishing Company, 1973), incorporated here by reference. The first and second replacement table unit 5a and 5b allow a faster access to the entries, especially when using a hash table and a hash function for accessing the entries in the first and second replacement table unit 5a and 5b.

Obviously, the first and second replacement table unit 5a and 5b may also be provided in the embodiments of the present invention described with respect to Figs. 1, 7 and 8.

In the following, a further preferred embodiment of the invention will be described with respect to Fig. 10 which shows a client/server data processing environment in which the present invention may be implemented.

In the following description of the preferred embodiment of the invention shown in Fig. 10 only those aspects will be described in which this preferred embodiment differs from the preferred embodiment of Fig. 1 and 9 respectively. As far as common or similar aspects of the preferred embodiments of Fig. 1, 9 and 10 are concerned, reference is made to the respective description of the preferred embodiments shown in Figs. 1 and 9.

Fig. 10 shows the server 2 to comprise a communication unit 3 which communicates with a first replacing unit 4a, as illustrated by arrow 112, allowing the first replacing unit 4a to replace data transmission request expressions which may be included in the data received from client 1 and transmitted from the communication unit 3 to the first replacing unit 4a. When receiving a data transmission request expression from client 1 via communication unit 3, the first replacing unit 4a accesses a first replacement table unit 5a, as indicated by arrow 113', to look up in the first replacement table unit 5a an entry that corresponds to the data transmission request expression received from the client 1 via the communication unit 3. If an entry exists in the replacement table unit 5, the first replacing unit 4a reads from the first replacement table unit 5a the replacement expression which corresponds to the data transmission request expression received from the communication unit 3. The first replacing unit 4a replaces the data transmission request expression contained in the data received from the client 1 via the communication unit 3 with the replacement expression read from the first replacement table unit 5a. Further, the first replacement unit 4a forwards the data received from the communication unit 3, however, now containing the replacement data transmission request expression as read from the first replacement table unit 5, to the retrieving unit 6 as indicated by arrow 114'.

Whenever the retrieving unit 6 receives a replacement data transmission request expression, the retrieving unit 6 accesses the data storage unit 7 to retrieve (read) data stored in the storage unit 7. Thereafter, the retrieving unit 6 communicates the retrieved data to second replacing unit 4b, as indicated by arrow 114'', allowing the second replacement unit 4b to replace data transmission request expressions which may be included in the data transmitted from the retrieving unit 6 to the second replacing unit 4b.

If the data as retrieved from the storage unit 7 contain data transmission request expression, the second replacing unit 4b may access a second replacing unit 5b, as indicated by arrow 113, to look up in the second replacing unit 5b whether a replacement expression exists for the data transmission request expression included in the data received from the retrieving unit 6, as indicated by arrow 114''. If a replacement expression exists in the second replacement table unit 5b, the second replacing unit 4b reads the replacement expression from the second replacement table unit 5b and replaces in the data received from the retrieving unit 6 the data transmission request expression with the replacement expression. Thereafter, the second replacing unit 4b communicates the data, now including the replacement data transmission request expression, to the communication unit 3, as indicated by arrow 112'', for transmitting the requested content data, however, now containing one or more replacement data transmission request expressions, to the client 1 as indicated by arrow 111.

In the preferred embodiment of Fig. 10, although a first and a second replacement unit 5a and 5b is shown, a single replacement table unit 5 may be provided which is accessed by the first and second replacing unit 4a and 4b, respectively. Still further, the replacement table unit 5 of the embodiment shown in Fig. 10 may be provided as part of the storage unit 7 as shown and discussed previously with respect to the embodiment of the invention shown in Fig. 7.

The first and second replacing unit 4a and 4b may comprise or may be included in or may be constituted by separate code sections containing instructions for performing replacing operations with respect to data transmission request expressions received from a client, either separately or included in other data. However, it is also possible that the first and second replacing unit may comprise or may be included in or may be constituted by separate data processing devices, which may also be servers, communicating with server 2 to receive a data transmission request expression from server 2 and to return to server 2 a replacement data transmission request expression.

As mentioned before, a data transmission request expression may take the form of a uniform resource location (URL). If a short URL is considered, i.e. the URL of a first maximum length, for example 128 characters, the replacement expression may be a long URL, i.e. the URL of a second maximum length, for example more than 128 characters in a scenario where the client transmits a short URL to the server where the short URL is replaced with a long URL. Similarly, a long URL received from the retrieving unit, either separately or contained in data retrieved from storage unit, may be replaced with a short URL for transmission to the client.

According to another embodiment of the invention, a server for replacing data transmission request expressions in a client/server data processing environment may have the following structural elements:
1) Server for replacing data transmission request expressions in a client/server data processing environment comprising
   one or more code sections for receiving a data transmission request expression transmitted from a client, said data transmission request expression being associated with data to be transmitted to the client;
   one or more code sections for reading a replacement data transmission request expression in a data transmission request expression replacement table;
   one or more code sections for retrieving data associated with said replacement data transmission request expression; and
   one or more code sections for transmitting said data to said client.
2) Server according to 1), comprising one or more code sections
   for determining whether the retrieved data contain a data transmission request expression and,
   if the retrieved data contains a data transmission request expression,
      for reading a replacement data transmission request expression from a data transmission request expression replacement table, and
      for replacing the data transmission request expression in the retrieved data with the replacement data transmission request expression.
3) Server according to 1), comprising one or more code sections
   for determining whether the retrieved data contain a data transmission request expression, and
   if the retrieved data contains a data transmission request expression,
      for determining whether the data transmission request expression should be replaced with respect to the client to which the data is to be transmitted and
      if the data transmission request expression should be replaced,
         for reading a replacement data transmission request expression from a data transmission request expression replacement table, and
         for replacing the data transmission request expression in the retrieved data with the replacement data transmission request expression.
4) Server according to 1) to 3), comprising one or more code sections for computing a hash function on the basis of then data transmission request expression and for using the computed hash value for reading the replacement data transmission request expression from data transmission request expression replacement table.
5) Method according to 1) to 4), comprising one or more code sections
   for determining whether a replacement data transmission request expression exists in the data transmission request expression replacement table for replacing a received data transmission request expression, and
   if no replacement data transmission request expression exists in data transmission request expression replacement table for the received data transmission request expression,
      for generating a replacement data transmission request expression and
      for storing the generated replacement data transmission request expression in association with the data transmission request expression for which the generated replacement data transmission request expression is a replacement, and
   for reading the replacement data transmission request expression associated with the received data transmission request expression.
6) Server for replacing data transmission request expressions in a client/server data processing environment comprising
   one or more code sections for retrieving data for transmission to a client, said data comprising a data transmission request expression being associated with data;
   one or more code sections for reading a replacement data transmission request expression corresponding to the retrieved data transmission request expression in a data transmission request expression replacement table;
   one or more code sections for replacing the data transmission request expression in said retrieved data; and
   one or more code sections for transmitting said data to said client.
7) Server according to 6), comprising one or more code sections for computing a hash function on the basis of the data transmission request expression and for using the computed hash value for reading the replacement data transmission request expression from the data transmission request expression replacement table.
8) Server according to 6) or 7), comprising one or more code sections
   for determining whether a replacement data transmission request expression exists in the data transmission request expression replacement table for replacing a received data transmission request expression, and
   if no replacement data transmission request expression exists in data transmission request expression replacement table for the received data transmission request expression,
      for generating a replacement data transmission request expression and
      for storing the generated replacement data transmission request expression in association with the data transmission request expression for which the generated replacement data transmission request expression is a replacement, and
   for reading the replacement data transmission request expression associated with the received data transmission request expression.
9) Server according to 6) to 8), wherein a data transmission request expression is a first uniform resource locator (URL) having a first length and a replacement data transmission request expression is a uniform resource locator having a second length.
10) Server according to 9), wherein if the first uniform resource locator is received from the client the first URL length is equal or less than 128 characters and the second URL length is equal of more than 128 characters.
11) Server according to 9), wherein if the second uniform resource locator is to be transmitted to the client the second URL length is equal or less than 128 characters and the first URL length is equal of more than 128 characters.

The invention may be embodied in a computer program comprising one or more code sections of the server as described above in 1) to 11).

The program may be recorded on a computer readable medium, where the program is to make the computer execute the method according to the 1) to 11).

## Claims

1. Method for replacing data transmission request expressions at a server (2) in a client/server data processing environment comprising:
a. Receiving a data transmission request expression transmitted from a client (1), said data transmission request expression associated with data to be transmitted to the client (1);
b. Reading a replacement data transmission request expression corresponding to the received data transmission request expression from a data transmission request expression replacement table (5) ;
c. Retrieving data associated with said replacement data transmission request expression; and
d. Transmitting said data to said client (1).

2. Method according to 1, comprising:
determining whether the retrieved data contain a data transmission request expression and
if the retrieved data contains a data transmission request expression, reading a replacement data transmission request expression corresponding to the received data transmission request expression from a data transmission request expression replacement table (5) and
replacing the data transmission request expression in the retrieved data with the replacement data transmission request expression.

3. Method according to claim 1, comprising:
determining whether the retrieved data contain a data transmission request expression, and
if the retrieved data contains a data transmission request expression, determining whether the data transmission request expression should be replaced with respect to the client (1) to which the data is to be transmitted and
if the data transmission request expression should be replaced, reading a replacement data transmission request expression from a data transmission request expression replacement table (5), and replacing the data transmission request expression in the retrieved data with the replacement data transmission request expression.

4. Method according to claims 1,2, or 3, wherein the reading of a replacement data transmission request expression comprises computing a hash function on the basis of the data transmission request expression and using the computed hash value for reading the replacement data transmission request expression from the data transmission request expression replacement table (5).

5. Method according any preceding claim, wherein the reading of a replacement data transmission request expression comprises:
determining whether a replacement data transmission request expression exists in the data transmission request expression replacement table (5) for replacing a received data transmission request expression,
if no replacement data transmission request expression exists in data transmission request expression replacement table (5) for the received data transmission request expression, generating a replacement data transmission request expression and
storing the generated replacement data transmission request expression in association with the data transmission request expression for which the generated replacement data transmission request expression is a replacement, and
reading the replacement data transmission request expression associated with the received data transmission request expression.

6. Method for replacing data transmission request expressions at a server (2) in a client/server data processing environment comprising:
a. Retrieving data for transmission to a client (1), said data comprising a data transmission request expression associated with data;
b. Reading a replacement data transmission request expression corresponding to the retrieved data transmission request expression from a data transmission request expression replacement table (5) ;
c. Replacing the data transmission request expression in said retrieved data; and
d. Transmitting said data to said client.

7. Method according to claim 6, wherein the reading of a replacement data transmission request expression comprises computing a hash function on the basis of then data transmission request expression and using the computed hash value for reading the replacement data transmission request expression from data transmission request expression replacement table (5).

8. Method according to claims 6 or 7, wherein the reading of a replacement data transmission request expression comprises:
determining whether a replacement data transmission request expression exists in the data transmission request expression replacement table (5) for replacing a received data transmission request expression,
if no replacement data transmission request expression exists in data transmission request expression replacement table (5) for the received data transmission request expression, generating a replacement data transmission request expression and
storing the generated replacement data transmission request expression in association with the data transmission request expression for which the generated replacement data transmission request expression is a replacement, and
reading the replacement data transmission request expression associated with the received data transmission request expression.

9. Method according to any preceding claim, wherein a data transmission request expression is a first uniform resource locator (URL) having a first length and a replacement data transmission request expression is a uniform resource locator having a second length.

10. Method according to claim 9, wherein if the first uniform resource locator is received from the client (1) the first URL length is equal or less than 128 characters and the second URL length is equal or more than 128 characters.

11. Method according to claim 9, wherein if the second uniform resource locator is to be transmitted to the client (1) the second URL length is equal or less than 128 characters and the first URL length is equal of more than 128 characters.

12. A computer readable medium, having a program recorded thereon, where the program is to make the computer execute the method according to the claims 1 to 11.

13. A computer program product comprising the computer readable medium according to claim 12.

14. Server for replacing data transmission request expressions in a client/server data processing environment comprising:
a. Communication unit (3) for receiving a data transmission request expression from a client (1) and for transmitting data to said client (1);
b. Replacing unit (4) for reading a replacement data transmission request expression from a replacement table unit (5) and for replacing said received data transmission request expression with a replacement data transmission request expression;
c. Retrieving unit (6) for retrieving said data associated with said replacement data transmission request expression.

15. Server for replacing data transmission request expressions according to claim 14, wherein the communication unit (3) exchanges data being or including a data transmission request expression with the replacing unit (4).

16. Server for replacing data transmission request expressions according to claim 14, wherein the replacing unit (4) exchanges data being or including a replacement data transmission request expression with the retrieving unit (6).

17. Server for replacing data transmission request expressions according to claim 14, wherein the retrieving unit (4) exchanges data being or including a data transmission request expression with the replacing unit (4).

18. Server for replacing data transmission request expressions according to claim 14, wherein the replacing unit (4) exchanges data being or including a replacement data transmission request expression with the communication unit (3).

19. Server for replacing data transmission request expressions according to any preceding claim, comprising storage unit (7) for storing data to be retrieved by the retrieving unit (6).

20. Server for replacing data transmission request expressions according to claim 19, wherein the replacement table unit (5) is provided in a memory unit of the server.

21. Server for replacing data transmission request expressions according to claim 19, wherein the replacement table unit (5) forms part of the storage unit (7).

22. Server for replacing data transmission request expressions according to any preceding claim, wherein the retrieving unit (4) communicates with another server (12) for retrieving data.

23. Server for replacing data transmission request expressions according to any preceding claim, wherein the replacement table unit (5) comprises a first replacement table unit (5a) and a second replacement table unit (5b).

24. Server for replacing data transmission request expressions according to any preceding claim, comprising first replacing unit (4a) for replacing data transmission request expressions received from the communications unit (3) and second replacing unit (4b) for replacing data transmission request expressions received from the retrieving unit (6).
